**Europäisches Patentamt**

**European Patent Office**

**Office européen des brevets**

(11) Veröffentlichungsnummer: **0 033 386**

**A1**

(12) ## EUROPÄISCHE PATENTANMELDUNG

(21) Anmeldenummer: **80108094.6**

(22) Anmeldetag: **20.12.80**

(51) Int. Cl.³: **F 17 C 1/12**
**F 25 D 3/10, C 01 B 3/00**

(30) Priorität: **31.01.80 DE 3003355**

(43) Veröffentlichungstag der Anmeldung:
**12.08.81 Patentblatt 81/32**

(84) Benannte Vertragsstaaten:
**AT BE CH FR IT LI NL**

(71) Anmelder: **MESSER GRIESHEIM GMBH**
**Patentabteilung Hanauer Landstrasse 330**
**D-6000 Frankfurt/Main(DE)**

(72) Erfinder: **Kesten, Martin, Dr.**
**Rothenbacherweg 12b**
**D-5064 Rösrath-Hoffnungsthal(DE)**

(54) **Verfahren zum Transport und zur Speicherung permanenter Gase.**

(57) Um das vorhandene Transportvolumen optimal auszunutzen, arbeitet man bei derartigen Verfahren mit den höchstzulässigen Betriebsdrücken. Trotz des damit verbundenen
Betriebsrisikos bleibt die transportierbare Gasmenge im Vergleich zum Behältergewicht gering.

Zwecks Vergrößerung der Transportkapazität bei gleichzeitiger Konstanthaltung oder Verringerung des Betriebsdruckes, wird das unter Druck stehende, in die Behälter abzufüllende Gas stark abgekühlt, vorzugsweise durch Wärmeaustausch mit flüssigem Stickstoff. Bei Wasserstoff ergibt sich
hierbei als zusätzlicher Vorteil die völlige Ausschaltung der
Gefahr der Wasserstoffversprödung des Behältermaterials.

EP 0 033 386 A1

## Beschreibung

Die Erfindung betrifft ein Verfahren zum Transport und zur Speicherung permanenter Gase, insbesondere von Wasserstoff, unter Druck in Druckbehältern.

Wasserstoff ist wegen seiner uneingeschränkten Verfügbarkeit und seiner umweltfreundlichen Verbrennungsprodukte einer der aussichtsreichsten zukünftigen Energieträger. Ein wesentliches Hindernis, welches einer breiten Einführung von Wasserstoff-Technologien im Wege steht, sind die heute noch unwirtschaftlichen Verfahren zur Speicherung und Verteilung dieses Gases.

Das derzeit am häufigsten angewendete Verfahren der Speicherung von Wasserstoff als komprimiertes Gas in Druckbehältern aus Stahl hat große Nachteile. Die Speicherkapazität solcher Gefäße ist sehr gering. Das im Vergleich zur speicherbaren Gasmenge hohe Behältergewicht ist besonders beim Gastransport von Nachteil und führt zwangsläufig zum Einsatz von Transportbehältern mit hohem Betriebsdruck. Dieser Nachteil eines erhöhten Betriebsrisikos gilt im übrigen nicht nur für Wasserstoff, sondern für jedes permanente Gas, also solche Gase, die sich durch Druckanwendung allein nicht verflüssigen lassen. Bei Wasserstoff kommt jedoch als zusätzliches Betriebsrisiko der Umstand hinzu, daß die für die Druckbehälter verwendeten Stähle in Gegenwart von Wasserstoff verspröden können.

In anderen Verfahren zum Transport und zur Speicherung von Wasserstoff wird verflüssigter Wasserstoff verwendet. Ferner werden Metallhydride als Speichermaterial eingesetzt. Wesentlichster Nachteil solcher Verfahren ist der hohe Energieaufwand. Die zur Verflüssigung von Wasserstoff erforderliche Energie beträgt z. B. mehr als die Hälfte des Heizwertes von Wasserstoff. Bei den Hydridspeichern ist die effektive Speicherkapazität wegen der großen Speichermasse und der zusätzlich erforderlichen Wärmeaustauscher ebenfalls gering. Auch die Kryoadsorption von Wasserstoff an Aktivkohle bietet demgegenüber keine nennenswerten Vorteile, da das Gas durch die Kohle verunreinigt wird und die Kohle selbst einen erheblichen Ballast darstellt.

Der Erfindung liegt daher die Aufgabe zugrunde, ein Verfahren zum Transport und zur Speicherung permanenter Gase, insbesondere von Wasserstoff, unter Druck in Druckbehältern zu schaffen, welches es gestattet, die Transport- bzw. Speicherkapazität zu erhöhen und gleichzeitig den Druck der Druckbehälter konstant zu halten oder sogar zu verringern.

Gemäß der Erfindung wird dies dadurch erreicht, daß die Gase auf Temperaturen oberhalb ihres Siedepunktes abgekühlt und in isolierten Druckbehältern transportiert und gespeichert werden.

Das erfindungsgemäße Verfahren macht sich also den Effekt zunutze, daß Gase beim Abkühlen ihr Volumen erheblich verringern. Voraussetzung für die wirtschaftliche Durchführbarkeit ist daher eine genügend tiefe Abkühlung der Gase. Hierzu wird bevorzugt, die Gase durch Wärmeaustausch mit flüssigem Stickstoff, der heute in großen Mengen preiswert zur Verfügung steht, abzukühlen. Die Abkühlung kann dabei herab bis zur Siedetemperatur des flüssigen Stickstoffs, 77° K, erfolgen.

Eine weitere Voraussetzung zur wirtschaftlichen Durchführung des erfindungsgemäßen Verfahrens ist eine ausgezeichnete Isolierung der Druckbehälter, damit die Gase ihre Abkühlungstemperatur genügend lange beibehalten. Hierzu genügen Isolierungen, wie sie seit langem für Transport-und Speicherbehälter für tiefsiedende verflüssigte Gase
verwendet werden, vollkommen.

Der durch das erfindungsgemäße Verfahren erzielbare Gewinn an Speicherkapazität ist so groß, daß es selbst dann noch vorteilhaft ist, wenn der Betriebsdruck gegenüber der derzeitigen Praxis erheblich reduziert wird. Dies bedeutet eine erhebliche Verminderung des Betriebsrisikos.

Die Druckbehälter müssen aus für den Tieftemperatureinsatz zugelassenen Behälterwerkstoffen gefertigt werden. Im Fall von Wasserstoff kommt dabei als zusätzlicher Vorteil hinzu, daß derartige kaltzähe Werkstoffe aufgrund ihrer Struktur und der niedrigen Betriebstemperatur nicht mehr der Gefahr der Wasserstoffversprödung ausgesetzt sind. Dies bedeutet eine weitere Verringerung des Betriebsrisikos. Das erfindungsgemäße Verfahren ist daher für den Transport und die Speicherung von Wasserstoff besonders gut geeignet, auch wenn es hierauf nicht beschränkt ist. Eine bevorzugte Ausführungsform besteht daher darin, Wasserstoff auf 77° K abzukühlen und bei Drücken zwischen 40 und 70 bar zu transportieren.

Die Transport- und Speicherbehälter zur Durchführung des erfindungsgemäßen Verfahrens werden zweckmäßig mit einer Vorrichtung zur Aufwärmung des Gasinhaltes ausgerüstet, um eine schnellere Entleerung zu erreichen und um den Gasinhalt beim Restdruck weiter zu verringern.

Im Vergleich zur herkömmlichen Druckspeicherung richtet sich die erreichbare Zunahme der Speicherkapazität nach dem Grad der Unterkühlung. Bei gleichem Behältervolumen und konstantem Gasdruck läßt sich beispielsweise die vierfache Gasmenge speichern, wenn das Gas auf die Siedetemperatur des flüssigen Stickstoffs abgekühlt wird.

-4-

Die Vorteile des erfindungsgemäßen Verfahrens werden durch die zwei nachfolgenden Vergleichsbeispiele veranschaulicht:

<u>1. Beispiel</u>

Verglichen werden zwei Satteltankzüge für den Transport von Wasserstoff, zulässiges Gesamtgewicht jeweils 38 t.

a) Herkömmliche Bauart, bestückt mit fünf Flaschenbündeln aus insgesamt 330 Flaschen à 50 Liter. Das geometrische Volumen beträgt somit 16.500 Liter, die Speicherkapazität von Wasserstoff bei 200 bar beträgt 3000 $m^3$.

b) Kryotank aus austenitischem Stahl zur Durchführung des erfindungsgemäßen Verfahrens. Der Betriebsdruck beträgt 47 bar, die Betriebstemperatur 77° K, das geometrische Volumen 40.000 Liter. Unter diesen Bedingungen beträgt die Speicherkapazität für Wasserstoff 7080 $m^3$.

Ein Tankzug mit gleichem zulässigem Gesamtgewicht transportiert daher bei Anwendung des erfindungsgemäßen Verfahrens die 2,36-fache Menge Wasserstoff.

<u>2. Beispiel</u>

Betrachtet wird ein superisolierter $H_2$-Kleinbehälter mit einer 20-Liter-Aluminiumflasche als Innenbehälter. Der Betriebsdruck beträgt 200 bar, das Gesamtgewicht mit Außenbehälter und Isolierung 31 kg.

Bei 200 bar und 77° K lassen sich in einem solchen Behälter 15 $m^3$ Wasserstoff speichern, die effektive Speicherkapazität liegt damit bei 4,08 kg $H_2$/100 kg Behälter. Demgegenüber beträgt die effektive Speicherkapazität von Hydridtanks, die z. Zt. als Kraftstofftanks für Automobile erprobt werden, zwischen 1,2 und 1,8 kg $H_2$/100 kg Behälter.

Ffm, den 22. Januar 1980
stph-ba/zh
MG 1222

MESSER GRIESHEIM GMBH                    MG 1222

Kennwort: Wasserstofftransport          EM 945

Erfinder: Dr. M. Kesten                  Ordner: E


Verfahren zum Transport und zur Speicherung permanenter Gase

Ansprüche

1. Verfahren zum Transport und zur Speicherung permanenter Gase, insbesondere von Wasserstoff, unter Druck in Druckbehältern, dadurch gekennzeichnet, daß die Gase auf Temperaturen oberhalb ihres Siedepunktes abgekühlt und in isolierten Druckbehältern transportiert und gespeichert werden.

2. Verfahren nach Anspruch 1, dadurch gekennzeichnet, daß die Gase durch Wärmeaustausch mit flüssigem Stickstoff abgekühlt werden.

3. Verfahren nach Anspruch 1 oder 2 zum Transport von Wasserstoff, dadurch gekennzeichnet, daß der Wasserstoff auf 77°K abgekühlt und bei Drücken zwischen 40 und 70 bar transportiert wird.

**Europäisches Patentamt**

## EUROPÄISCHER RECHERCHENBERICHT

Nummer der Anmeldung

EP 80 10 8094

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe. soweit erforderlich. der maßgeblichen Teile | | betrifft Anspruch | F 17 C 1/12<br>F 25 D 3/10<br>C 01 B 3/00 |
| X | <u>DE - B - 1 289 070</u> (VEHOC)<br><br>* Spalte 1, Zeile 24 - Spalte 2, Zeile 19; Spalte 11, Zeilen 21-38; Abbildung *<br><br>-- | | 1 | |
| X | <u>DE - A - 1 501 757</u> (VEHOC)<br><br>* Seite 1, Zeilen 1-8; Seite 8, Zeile 9 - Seite 10, Zeile 21; Ansprüche 1,2,4; Abbildung *<br><br>-- | | 1 | |
| X | <u>FR - A - 1 452 058</u> (LES CONDUITES IMMERGEES)<br><br>* Seite 1, Spalte 2, Zeile 18 - Seite 2, Spalte 1, Zeile 14; Seite 7, Spalte 2, Zusammen-fassung A,1°,2°,B; Abbildungen 6,7 *<br><br>-- | | 1 | |

**RECHERCHIERTE SACHGEBIETE (Int. Cl.³)**

| | | |
|---|---|---|
| B 60 K | 15/08 |
| C 01 B | 3/00 |
| F 17 C | 1/00 |
| | 1/12 |
| | 3/00 |
| | 3/02 |
| | 9/02 |
| F 25 B | 19/00 |
| F 25 D | 3/10 |
| F 25 J | 1/00 |

| | | | |
|---|---|---|---|
| | <u>NL - A - 65 07597</u> (SHELL)<br><br>* Seite 1, Zeilen 1,2,10-14; Seite 3, Zeilen 2-7 *<br><br>-- | 2 | |
| | <u>DE - A - 2 554 906</u> (LINDE)<br><br>* Ansprüche 1,3; Seite 3, Zeilen 1-4; Seite 9, Zeile 13 - Seite 10, Zeile 20; Abbildungen 1,2 *<br><br>-- | 2 | |
| T | INTERNATIONAL JOURNAL OF HYDROGEN ENERGY, Band 5, Nr. 1, März 1980, Seiten 35-54<br>Oxford, G.B.<br>J.H. KELLEY et al.: "Storage, transmission and distribution of hydrogen"<br>./. | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie. übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 06-05-1981 | SIEM |

EPA form 1503.1 06.78

Europäisches
Patentamt

**EUROPÄISCHER RECHERCHENBERICHT**

## EINSCHLÄGIGE DOKUMENTE

KLASSIFIKATION DER
ANMELDUNG (Int.Cl. ³)

| Kategorie | Kennzeichnung des Dokuments mit Angabe, soweit erforderlich, der maßgeblichen Teile | betrifft Anspruch |
|---|---|---|
| | * Seiten 39-47 * | |

RECHERCHIERTE
SACHGEBIETE (Int. Cl. ³)

EPA Form 1503.2   06.78